(19) Europäisches Patentamt
European Patent Office
Office européen des brevets

(11) **EP 2 994 970 B1**

(12) **EUROPÄISCHE PATENTSCHRIFT**

(45) Veröffentlichungstag und Bekanntmachung des Hinweises auf die Patenterteilung:
**04.03.2020 Patentblatt 2020/10**

(21) Anmeldenummer: **14721331.8**

(22) Anmeldetag: **29.04.2014**

(51) Int Cl.:
**H02J 3/38** *(2006.01)*    **F03D 7/04** *(2006.01)*
**H02J 3/48** *(2006.01)*    **H02J 3/50** *(2006.01)*
**F03D 7/02** *(2006.01)*    **H02P 9/04** *(2006.01)*

(86) Internationale Anmeldenummer:
**PCT/EP2014/058731**

(87) Internationale Veröffentlichungsnummer:
**WO 2014/180717 (13.11.2014 Gazette 2014/46)**

(54) **VERFAHREN ZUM EINSPEISEN ELEKTRISCHER LEISTUNG IN EIN ELEKTRISCHES VERSORGUNGSNETZ**

METHOD FOR FEEDING ELECTRIC POWER INTO AN ELECTRIC POWER SUPPLY SYSTEM

PROCÉDÉ D'INJECTION DE PUISSANCE ÉLECTRIQUE DANS UN RÉSEAU DE DISTRIBUTION ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **07.05.2013 DE 102013208410**

(43) Veröffentlichungstag der Anmeldung:
**16.03.2016 Patentblatt 2016/11**

(73) Patentinhaber: **Wobben Properties GmbH**
**26607 Aurich (DE)**

(72) Erfinder:
• **BEEKMANN, Alfred**
**26639 Wiesmoor (DE)**
• **BUSKER, Kai**
**26629 Großefehn (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**EP-A2- 1 907 697    US-B2- 7 800 242**

• **MANSOUR MOHSENI ET AL: "Comparing technical connection requirements for large wind power plants", POWER AND ENERGY SOCIETY GENERAL MEETING, 2011 IEEE, IEEE, 24. Juli 2011 (2011-07-24), Seiten 1-8, XP032055114, DOI: 10.1109/PES.2011.6039042 ISBN: 978-1-4577-1000-1**
• **Simatic: "Wie kann mit PCS 7 eine Polygonfunktion mit mehr als 8 Stützstellen realisiert werden?", SIMATIC Manager -- Programm erstellen -- CFC - Bearbeiten von Quellen, 2. Dezember 2010 (2010-12-02), XP055130584, Gefunden im Internet: URL:http://support.automation.siemens.com/WW/llisapi.dll?func=cslib.csSearch&objaction=cssearch&lang=de&siteid=cseus&query=&query2=polynom&content=adsearch%2Fadsearch.a spx [gefunden am 2014-07-21]**
• **MITESHKUMAR POPAT ET AL: "Fault Ride-Through Capability of Cascaded Current-Source Converter-Based Offshore Wind Farm", IEEE TRANSACTIONS ON SUSTAINABLE ENERGY, IEEE, USA, vol. 4, no. 2, 1 April 2013 (2013-04-01), pages 314-323, XP011497605, ISSN: 1949-3029, DOI: 10.1109/TSTE.2012.2223246**
• **Ausgabe Juni: "Technische Richtlinie Erzeugungsanlagen am Mittelspannungsnetz", , 1 January 2008 (2008-01-01), XP055496807, Retrieved from the Internet: URL:http://www.mega-monheim.de/assets/bdew _rl_ea-am-ms-netz_juni_2008_end.pdf**

**Beschreibung**

Die vorliegende Erfindung betrifft ein Verfahren zum Einspeisen elektrischer Leistung wenigstens einer Windenergieanlage oder eines Windparks in ein elektrisches Versorgungsnetz. Weiterhin betrifft die vorliegende Erfindung eine Windenergieanlage zum Einspeisen elektrischer Energie in ein elektrisches Versorgungsnetz und sie betrifft einen Windpark, der mehrere Windenergieanlagen umfasst, zum Einspeisen elektrischer Energie in ein elektrisches Versorgungsnetz.

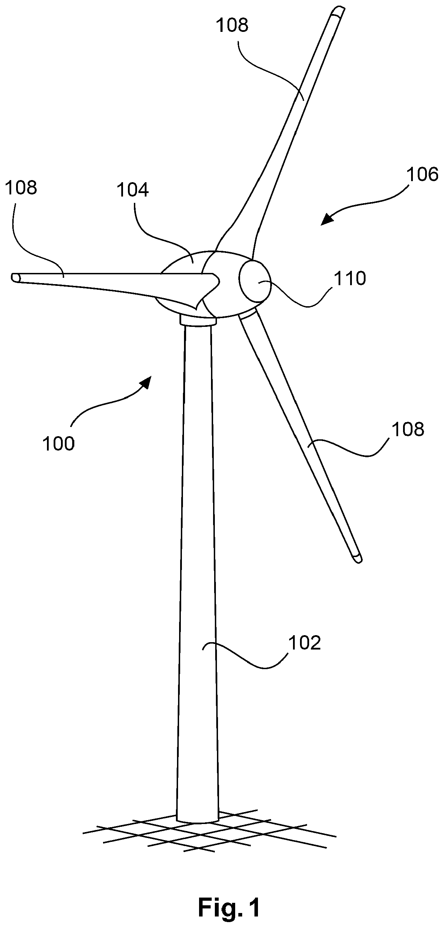

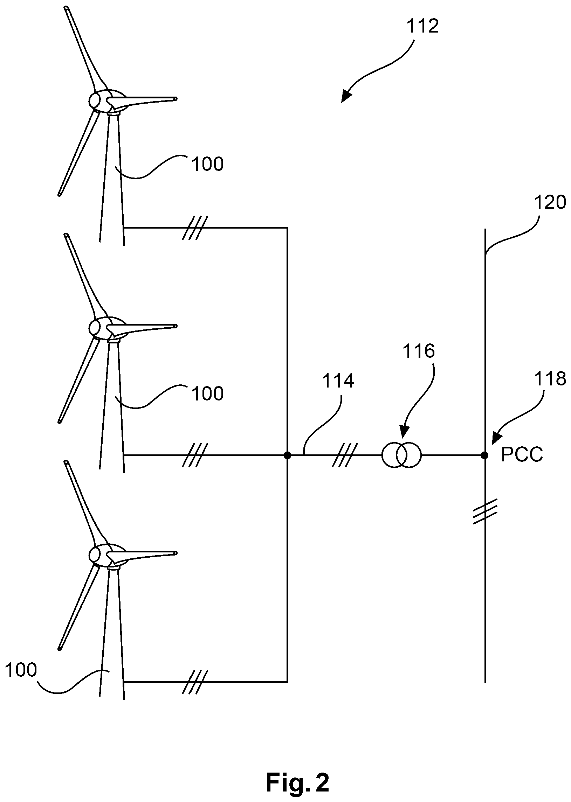

Eine Windenergieanlage ist schematisch in Figur 1 und ein Windpark schematisch in Figur 2 dargestellt.

Windenergieanlagen sind allgemein bekannt und dienen heutzutage vornehmlich dem Zweck, in ein elektrisches Versorgungsnetz einzuspeisen. Dabei passt die Windenergieanlage den einzuspeisenden Strom nach Frequenz und Phase und unter Berücksichtigung der entsprechenden Spannung an das elektrische Versorgungsnetz an. Das ist eine Grundvoraussetzung, die in jedem Fall erfüllt werden muss und von bekannten Windenergieanlagen auch erfüllt wird. Gleiches gilt für einen Windpark, der mehrere Windenergieanlagen aufweist, die gemeinsam über einen gemeinsamen Netzanschlusspunkt (PCC) in ein elektrisches Versorgungsnetz einspeisen. In diesem Fall speist der Windpark in das elektrische Versorgungsnetz ein.

Es ist bereits vor einiger Zeit erkannt worden, dass es nicht nur wünschenswert sein kann, mit der Windenergieanlage bzw. dem Windpark möglichst viel elektrische Leistung in das Versorgungsnetz einzuspeisen, das vereinfachend auch nachfolgend als Netz bezeichnet wird, sondern die Windenergieanlage bzw. den Windpark auch zum Stützen des Netzes zu verwenden. Entsprechende Lösungsvorschläge beschreiben die Patentanmeldungen US 6,784,564, US 6,891,281, US 6,965,174, US 7,462,946, und US 7,800,242. Diese Anmeldungen schlagen bereits vor, abhängig von einer Spannung oder einer Frequenz im Versorgungsnetz die einzuspeisende Leistung bzw. den einzuspeisenden Strom nach Höhe und/oder nach Art zu verändern, um dadurch das Versorgungsnetz zu stützen.

Heutzutage liegt in vielen Ländern die Situation vor, dass Windenergieanlagen in einem Versorgungsnetz einen immer größeren Anteil der Gesamtleistung ausmachen. Das führt dazu, dass die Notwendigkeit das Netz durch Windenergieanlagen zu stützen steigt. Es steigt auch die Dominanz der Windenergieanlagen im Netz und damit ihre Einflussmöglichkeit. Entsprechend wirksam kann auch eine Netzstützung durch die Windenergieanlagen bzw. Windparks im Netz sein.

Der vorliegenden Erfindung liegt somit die Aufgabe zugrunde, wenigstens eines der genannten Probleme zu adressieren. Insbesondere soll eine Lösung vorgeschlagen werden, die der steigenden Bedeutung der Windenergieanlagen zur Stützung des Netzes gerecht wird bzw. dazu zumindest einen Beitrag leistet. Insbesondere soll eine Netzstützung durch Windenergieanlagen bzw. Windparks qualitativ und/oder quantitativ verbessert werden. Zumindest soll eine alternative Lösung vorgeschlagen werden.

Erfindungsgemäß wird ein Verfahren nach Anspruch 1 vorgeschlagen. Demnach wird elektrische Leistung wenigstens einer Windenergieanlage oder eines Windparks in ein elektrisches Versorgungsnetz eingespeist. Das Versorgungsnetz weist eine Netzspannung und eine Netzfrequenz auf. Das Verfahren ist zum Einspeisen elektrischer Wirkleistung P als auch elektrischer Blindleistung Q vorbereitet. Das Verfahren und entsprechend die Windenergieanlage bzw. der Windpark, die bzw. der das Verfahren umsetzt ist somit zum Einspeisen elektrischer Wirkleistung, als auch zum Einspeisen elektrischer Blindleistung vorbereitet.

Die eingespeiste Wirkleistung P ist dabei über eine Wirkleistungssteuerung in Abhängigkeit wenigstens eines Netzzustandes einstellbar. Die Wirkleistung wird also nicht fest vorgegeben, oder nur abhängig von dem vorherrschenden Wind eingespeist, sondern sie wird in Abhängigkeit wenigstens eines Netzzustandes, wie bspw. der Netzfrequenz, eingestellt.

Außerdem oder alternativ wird die eingespeiste Blindleistung Q nicht fest vorgegeben, sondern in Abhängigkeit wenigstens eines Netzzustandes, wie bspw. der Netzspannung, eingestellt.

Vorzugsweise erfolgt die Wirkleistungssteuerung oder die Blindleistungssteuerung in Abhängigkeit der Netzsensitivität als Netzzustand. Insbesondere wird vorgeschlagen, die Wirkleistung zu verringern, wenn die Netzsensitivität zunimmt, um dadurch das Netz zu stabilisieren.

Weiter bevorzugt wird vorgeschlagen, mehrere, insbesondere zwei Abhängigkeiten gleichzeitig zu berücksichtigen, also zwei Einstellfunktionen zu berücksichtigen. Beispielsweise gibt eine Einstellfunktion eine Wirkleistung in Abhängigkeit der Netzfrequenz an, während die andere Einstellfunktion die Wirkleistung in Abhängigkeit der Netzsensitivität angibt. Von beiden Einstellfunktionen wird dann jeweils der kleinere Wert berücksichtigt.

Hierbei geben die Wirkleistungssteuerung bzw. die Blindleistungssteuerung einen einzuspeisenden Sollwert vor, der jeweils über eine Einstellfunktion in Abhängigkeit wenigstens eines Netzzustandes eingestellt wird. Die Windenergieanlage oder der Windpark, insbesondere ein dafür verwendeter Wechselrichter setzt dann diese Vorgabe um und erzeugt einen entsprechenden Strom, insbesondere einen entsprechenden dreiphasigen Strom, der die Einspeisung der gewünschten Wirkleistung bzw. der gewünschten Blindleistung in das Versorgungsnetz realisiert.

Es wird für die Einstellfunktion vorgeschlagen, dass diese mit Hilfe von Stützstellen vorgegeben wird. Solche Stützstellen werden durch Wertepaare aus jeweils einem Wert für die Wirkleistung bzw. einem Wert für Blindleistung und aus einem Wert für den Netzzustand definiert, wie bspw. die Netzfrequenz oder die Netzspannung.

Somit werden wenigstens zwei solche Wertepaare vorgegeben, die dadurch die Einstellfunktion festlegen können, wobei ggf. weitere Informationen einfließen können, wie die Formen der Funktion. Werden für die Einstellfunktion bzw. einen Teilabschnitt der Einstellfunktion zwei Stützstellen, also zwei Wertepaare verwendet, können diese somit insbesondere einen Anfangs- und einen Endpunkt der Einstellfunktion bzw. der Teilfunktion festlegen.

Bspw. kann für die Steuerung der Wirkleistung in Abhängigkeit der Netzfrequenz als Netzzustand im einfachsten Fall ein Abschnitt einer Einstellkurve für die Wirkleistung durch zwei Stützstellen mit einer diese Stützstellen verbindenden Gerade definiert werden. Dabei kann die erste Stützstelle durch das Wertepaar ($f_1$, $P_1$) und die zweite Stützstelle durch das Wertepaar ($f_2$, $P_2$) definiert werden, wobei $f_1$ und $f_2$ jeweils einen Frequenzwert der Netzfrequenz und $P_1$ und $P_2$ den zugehörigen Leistungswert angeben. Dies ist lediglich ein einfaches Beispiel für die Wirkleistung in Abhängigkeit der Frequenz. Vorzugsweise können weitere Stützstellen angegeben werden und dadurch kann eine verbesserte Funktion der einzuspeisenden Wirkleistung in Abhängigkeit der Netzfrequenz vorgegeben werden.

Gemäß einer Ausführungsform wird vorgeschlagen, dass die Einstellfunktion in Abhängigkeit eines Änderungskriteriums geändert wird. Das Änderungskriterium ist dabei ein Kriterium, das bestimmt ob überhaupt geändert wird. Ggf. kann das Änderungskriterium auch festlegen, wie geändert wird. Das Änderungskriterium wird weiter unten noch erläutert und kann in einem Fall in einer externen Vorgabe bestehen. Die Änderung wird zumindest teilweise dadurch durchgeführt, dass wenigstens ein Wertepaar geändert wird. Somit kann auf einfache Art und Weise eine Anpassung der Wirkleistungssteuerung und/oder der Blindleistungssteuerung an geänderte Anforderungen erreicht werden, indem im einfachsten Fall nur ein Wertepaar geändert wird. Das Verfahren kann nun basierend auf einem neuen Satz Wertepaare, also einem neuen Satz Stützstellen und ggf. weiterer Informationen zu dem Funktionsverlauf zwischen den Stützstellen einen neuen Funktionsverlauf für die Einstellfunktion bestimmen. Weil die Einstellfunktion gemäß dem vorgeschlagenen Verfahren sowieso basierend auf den Stützstellen berechnet wird, ist auch diese Neuberechnung jedenfalls in einem Prozessrechner ohne nennenswerten Aufwand umsetzbar.

Vorzugsweise ist die Einstellfunktion abschnittsweise aus mehreren Teilfunktionen zusammengesetzt. Die Einstellfunktion kann also für unterschiedliche Abschnitte unterschiedliche Funktionsverläufe realisieren. Jeweils zwei der Teilfunktionen - und gemäß einer Ausführungsform werden nur zwei Teilfunktionen verwendet - sind an einer Stützstelle zusammengesetzt und weisen an dieser Stützstelle denselben Wert auf. Dadurch kann auf einfache Art und Weise eine zusammengesetzte Einstellfunktion realisiert werden und dadurch können unterschiedliche Bereiche, insbesondere unterschiedliche Bereiche des zugrundeliegenden Netzzustandes, berücksichtigt werden. Im einfachsten Fall ist es dabei möglich, über drei Wertepaare, also über drei Stützstelle, eine Einstellfunktion mit zwei Teilfunktionen festzulegen. Vorzugsweise werden aber die Teilfunktionen oder zumindest eine der Teilfunktionen jeweils durch mehr als zwei Stützstellen, insbesondere durch mehr als drei Stützstellen vorgegeben. Dadurch kann die jeweilige Einstellfunktion modelliert werden und dadurch kann bspw. auch ein Übergang zwischen zwei Teilfunktionen verändert werden. Dadurch, dass die Teilfunktionen an ihrer gemeinsamen Stützstelle denselben Wert aufweisen, wird ein Sprung zwischen diesen beiden Teilfunktionen vermieden.

Vorzugsweise wird vorgeschlagen, dass die Einstellfunktion oder zumindest eine Teilfunktion ihrer Art nach

- eine Polynomfunktion erster Ordnung,
- eine Polynomfunktion zweiter Ordnung,
- eine Polynomfunktion dritter oder höherer Ordnung,
- eine Exponentialfunktion,
- eine Hysterese-Funktion,
- eine trigonometrische Funktion oder
- eine andere nichtlineare Funktion

ist.

Eine Polynomfunktion erster Ordnung beschreibt eine Gerade. Hierdurch kann auf einfache Art und Weise eine Funktion zwischen zwei Stützstellen definiert werden. Eine Polynomfunktion zweiter Ordnung ermöglicht eine im Vergleich zur ersten Ordnung komplexere Funktion, die zwei Stützstellen im Vergleich zu einer Geraden im Grunde mit einer Art bauchigen Funktion verbinden kann. Durch diese bauchige Funktion im Vergleich zu einer Geraden kann mitunter besser auf eine Systemanforderung eingegangen werden. Eine Festlegung dieser Polynomfunktion zweiter Ordnung ist auf einfache Weise durch Vorgabe einer dritten Stützstelle möglich. Die Polynomfunktion zweiter Ordnung kann somit durch drei Stützstellen eindeutig definiert werden. Es ist leicht erkennbar, dass somit eine vorteilhafte Einstellfunktion, die über ein rein lineares Verhalten hinausgeht, gleichwohl auf denkbar einfache Weise vorgegeben werden kann.

Mit einer Polynomfunktion dritter oder höherer Ordnung ist es möglich, noch weiter individualisierte Einstellfunktionen zu realisieren. Bereits bei einer Polynomfunktion dritter Ordnung kann - je nach Parametrierung - eine Wendestelle auftreten. Eine solche Wendestelle kann unerwünscht sein, aber sie bzw. die entsprechend zugrundeliegende komplexe Funktion kann dabei möglicherweise ein abschnittsweises Zusammensetzen mehrerer Teilfunktionen zu der Einstellfunktion vermeiden. Zumindest kann erreicht werden, die Einstellfunktion in weniger Abschnitte zu unterteilen.

Eine Exponentialfunktion zeichnet sich insbesondere durch einen langsamen, immer stärker werdenden Anstieg aus, der bei entsprechendem Vorzeichen auch negativ sein kann. Dadurch kann bspw. für eine frequenzabhängige Wirkleistungsvorgabe zunächst ein mit steigender Frequenz schwacher Abfall der Leistung realisiert werden, der dann sehr viel stärker zunimmt, die Wirkleistung also mit steigender Frequenz schneller abfällt und bis zu einer maximalen Frequenz mit sehr steilem Abfall den Leistungswert 0 erreichen kann. Für den Fall, dass die Leistung aufgrund der Umstände, insbesondere der vorliegenden Topologie, bei einem vorgegebenen Frequenzwert den Leistungswert 0 erreichen muss, ermöglicht eine solche negative Exponentialfunktion, die Leistung möglichst lange groß zu halten, so dass möglichst wenig der verfügbaren Leistung verschenkt wird.

Durch die Verwendung einer Hysterese-Funktion können bspw. unterschiedliche Verläufe der Einstellfunktion abhängig davon erreicht werden, ob der zugrundeliegende Netzzustand ansteigt oder abfällt.

Durch eine trigonometrische Funktion, also insbesondere eine Sinus-, Kosinus- und Tangens-Funktion bzw. Kombinationen davon oder Abwandlungen dazu, können spezielle Verläufe für die Einstellfunktion erreicht werden, die über die Vorgabe der Stützstellen dann vergleichsweise einfach realisiert werden können. Bspw. kann durch eine tanh-Funktion eine einer Saturierungsfunktion ähnliche Funktion erreicht werden, die stetig differenzierbar ist. Hierdurch kann bspw. eine spannungsabhängige Blindleistungssteuerung definiert werden, also eine Einstellfunktion die eine einzuspeisende Blindleistung in Abhängigkeit der Netzspannung vorgibt. Dabei wäre der Nullpunkt dieser tanh-Funktion auf den Wert der Nennspannung der Netzspannung zu legen.

Als andere nicht-lineare Funktionen kommen bspw. auch Hyperbel-Funktionen oder Logarithmus-Funktionen oder Wurzel-Funktionen in Betracht, um nur einige Beispiele zu nennen.

Gemäß einer Ausführungsform wird vorgeschlagen, dass die Einstellfunktion oder zumindest eine ihre Teilfunktionen durch wenigstens zwei Stützstellen und ihre Art, also die Art der Einstellfunktion festgelegt wird. Durch Art der Funktion oder Teilfunktion kann insbesondere - graphisch gesprochen - ihre Form festgelegt werden. Durch die Stützstellen, die insbesondere am Anfang und am Ende der Funktion oder Teilfunktion angeordnet werden, kann die nun in ihrer Form festgelegte Funktion konkret festgelegt werden.

Vorzugsweise wird die Einstellfunktion oder zumindest eine Teilfunktion durch Verwendung einer Polynomfunktion erster Ordnung und Vorgabe von zwei Stützstellen festgelegt. Diese Funktion oder Teilfunktion ist dadurch eindeutig bestimmt. Alternativ wird die Einstellfunktion oder zumindest eine Teilfunktion durch Verwendung einer Polynomfunktion zweiter Ordnung und Vorgabe von drei Stützstellen festgelegt. Hierdurch ist eine komplexere Einstellfunktion vorgebbar, die dabei durch diese drei Stützstellen eindeutig festgelegt ist.

Weiterhin wird die Wirkleistungssteuerung und außerdem oder alternativ die Blindleistungssteuerung in Abhängigkeit der Netzsensitivität geändert.

Hierbei wird unter einer Netzsensitivität die Reaktion des Netzes, insbesondere bezogen auf den gemeinsamen Netzanschlusspunkt, auf eine Änderung einer Größe verstanden, die auf das Netz wirkt. Die Netzsensitivität kann als Differenz einer Netzreaktion im Bezug auf eine Differenz einer Netzeinflussgröße definiert werden. Insbesondere kommt im vorliegenden Fall eine Definition im Bezug auf eingespeiste Wirkleistung und Höhe der Netzspannung in Betracht. Vereinfacht kann beispielsweise für die Netzsensitivität NS die folgende Formel definiert werden:

$$NS = \frac{\Delta U}{\Delta P}$$

Hierbei bezeichnet $\Delta P$ die Änderung der eingespeisten Wirkleistung, nämlich der eingespeisten Parkleistung und $\Delta U$ die resultierende Änderung der Netzspannung U. Diese Differenzen werden über einen sehr kurzen Zeitraum gebildet, insbesondere im Bereich von einer Sekunde oder darunter und vorteilhafterweise kann auch statt dieser anschaulichen Formel über die Differenz der Spannung im Bezug auf die Differenz der Leistung entsprechend eine partielle Ableitung der Netzspannung U nach der eingespeisten Parkleistung P gebildet werden. Es kommt als Netzreaktion auch die Änderung der Netzfrequenz f in Betracht. Eine weitere Möglichkeit der Berücksichtigung der Netzsensitivität wäre über die Formel:

$$NS = \frac{\Delta f}{\Delta P}$$

Die Netzsensitivität wird somit vorzugsweise als Maß für die zu wählende Wirkleistungssteuerung und/oder die zu wählende Blindleistungssteuerung verwendet. Ändert sich die Netzsensitivität zumindest signifikant, kann die entsprechende Wirkleistungssteuerung und/oder die entsprechende Blindleistungssteuerung in Art und/oder Parametrierung geändert werden. Eine Änderung der Art entspricht insoweit einer Änderung des Typs der Steuerung, was hier synonym verwendet wird. Alternativ kann die Netzsensitivität unmittelbar die Steuerung, insbesondere die Wirkleistungsteuerung beeinflussen, nämlich als zugrundeliegender Netzzustand.

Weiterhin wird die Wirkleistungssteuerung und/oder die Blindleistungsteuerung in Abhängigkeit eines Kurzschlussstromverhältnisses am Einspeisepunkt verändert.

Das Kurzschlussstromverhältnis, das auch als SCR (Short Circuit Ratio) bezeichnet wird, bezeichnet das Verhältnis der Kurzschlussleistung zur Anschlussleistung. Hierbei wird unter Kurschlussleistung diejenige Leistung verstanden, die das betreffende Versorgungsnetz an dem betrachteten Netzanschlusspunkt, an dem die Windenergieanlage bzw. der Windpark angeschlossen ist, bereitstellen kann, wenn an diesem Netzanschlusspunkt ein Kurzschluss auftritt. Die Anschlussleistung ist die Anschlussleistung der angeschlossenen Windenergieanlage bzw. des angeschlossenen Windparks und damit insbesondere die Nennleistung des anzuschließenden Generators bzw. die Summe aller Nennleistungen der Generatoren des Windparks. Das Kurzschlussstromverhältnis ist somit ein Kriterium zur Stärke des elektrischen Versorgungsnetzes in Bezug auf diesen betrachteten Netzanschlusspunkt. Ein auf diesen Netzanschlusspunkt bezogenes starkes elektrisches Versorgungsnetz weist meist ein großes Kurzschlussstromverhältnis von bspw. SCR = 10 oder größer auf.

Es wurde erkannt, dass das Kurzschlussstromverhältnis auch eine Information über das Verhalten des betreffenden Versorgungsnetzes am Netzanschlusspunkt gegeben kann. Dabei kann das Kurzschlussstromverhältnis auch variieren.

Vorteilhaft ist es, bei der Neuinstallation eines Windparks oder einer Windenergieanlage das Kurzschlussstromverhältnis zu berücksichtigen und die Wirkleistungssteuerung und die Blindleistungssteuerung daran anzupassen. Es wird vorzugsweise weiter vorgeschlagen, das Kurzschlussstromverhältnis auch nach der Installation und Inbetriebnahme einer Windenergieanlage bzw. eines Windparks in regelmäßigen Abständen zu erfassen. Die Erfassung der Kurzschlussleistung kann bspw. über Informationen über die Netztopologie mit Hilfe einer Simulation erfolgen. Die Anschlussleistung kann einfach über die Kenntnis der installierten Windenergieanlagen in einem Park erfolgen und/oder sie kann über die Messung der eingespeisten Leistung bei Nennwind erfolgen.

Vorzugsweise wird eine Anschlussleistung zur vorgeschlagenen Berechnung und Berücksichtigung des Kurzschlussstromverhältnisses als Summe der Nennleistung aller jeweils aktuell verfügbaren Windenergieanlagen definiert und berechnet. Die Anschlussleistung würde sich in diesem Sinne somit bereits schon bei Ausfall einer Windenergieanlage ändern, zumindest vorrübergehend ändern. Damit würde sich auch das Kurzschlussstromverhältnis ändern und hierüber könnte eine Änderung der Wirkleistungssteuerung und/oder der Blindleistungssteuerung ausgelöst werden.

Gemäß einer weiteren Ausführungsform wird vorgeschlagen, dass die Anschlussleistung als Summe der aktuell verfügbaren Leistung im Windpark unter Berücksichtigung der vorherrschenden Windverhältnisse berechnet wird, bzw. dass anstelle der Anschlussleistung des Windparks die Summe der aktuell verfügbaren Leistungen des Windparks zur Berechnung des Kurzschlussstromverhältnisses verwendet wird und/oder als Änderungskriterium zum Ändern der Wirkleistungssteuerung und/oder der Blindleistungssteuerung verwendet wird. Es wird also auf dieser so ermittelten Parkleistung das Kurzschlussstromverhältnis neu berechnet, um diese Änderungsbedingung zu bestimmen, oder es kann auch unmittelbar aus der im Park verfügbaren Leistung ein Änderungskriterium abgeleitet werden.

Bspw. kann die Umschaltbedingung so aussehen, dass ein Parameter, wie ein Verstärkungsfaktor oder die Steigung einer Funktion von dem Kurzschlussstromverhältnis, oder einem anderen Kriterium, abhängt. Bspw. könnte eine proportionale Abhängigkeit bestehen. Als weiteres Beispiel, das aber nicht abschließend ist, kann ein Grenzwert festgelegt werden und von einer Wirkleistungssteuerung auf eine dem Typ nach andere Wirkleistungssteuerung umgeschaltet werden, wenn das Kurzschlussstromverhältnis oder ein anderes Kriterium diesen Grenzwert überschreitet bzw. unterschreitet. Ähnliches gilt auch für eine Änderung der Blindleistungssteuerung.

Vorzugsweise erfolgt eine Veränderung der Wirkleistungssteuerung und/oder Blindleistungssteuerung durch eine externe Vorgabe, wie bspw. über ein externes Signal, das an einem Prozessrechner, der die Wirkleistungssteuerung und/oder die Blindleistungssteuerung durchführt, eingegeben wird. Vorzugsweise wird eine solche Vorgabe von einem Netzbetreiber gemacht, der dafür ein solches externes Signal übermittelt.

Auch hierdurch können einer oder mehrere Parameter geändert werden oder es wird auf einen anderen Typ bzw. eine andere Art der Wirkleistungssteuerung oder Blindleistungssteuerung umgeschaltet. Gemäß einer Ausführungsform kann auch die gewünschte neue Konfiguration der jeweiligen Wirkleistungssteuerung oder Blindleistungssteuerung übertragen werden. Es können also zu ändernde Parameter übertragen werden oder es kann sogar ein neuer Algorithmus übertragen werden.

Vorzugsweise werden hierbei Wertepaare zum Bestimmen der Stützstelle übertragen. Zumindest wird vorgeschlagen, ein Wertepaar zu übertragen.

Gemäß einer Ausführungsform wird vorgeschlagen, dass eine Blindleistungssteuerung bzw. eine Einstellfunktion für die Blindleistungssteuerung abhängig von der eingespeisten und/oder einspeisbaren Wirkleistung der Windenergieanlage bzw. des Windparks verändert wird, insbesondere so, dass bei geringerer eingespeister oder einspeisbarer Wirkleistung auf eine Blindleistungssteuerung umgestellt wird bzw. diese so verändert wird, dass dem Betrage nach eine höhere Blindleistung eingespeist wird und/oder dass die Blindleistungssteuerung dem Betrage nach einen höheren Blindleistungsendwert zum Einspeisen aufweist.

Außerdem wird eine Windenergieanlage vorgeschlagen, die dazu vorbereitet ist, ein Verfahren gemäß einer der beschriebenen Ausführungsformen umzusetzen. Insbesondere weist eine solche Windenergieanlage einen entsprechenden Prozessrechner und einen entsprechenden Frequenzwechselrichter auf, der zum Durchführen solcher Blindleistungseinspeisung und/oder Wirkleistungseinspeisung geeignet ist. Insbesondere sollte der verwendete Wechselrichter bzw. die verwendete Windenergieanlage FACTS-fähig sein.

Außerdem wird ein Windpark vorgeschlagen, der dazu vorbereitet ist, ein Verfahren gemäß einer der beschriebenen Ausführungsformen umzusetzen. Insbesondere ist er dazu vorbereitet, elektrische Wirkleistung und elektrische Blindleistung in ein Versorgungsnetz einzuspeisen und dazu eine veränderbare Wirkleistungssteuerung und/oder eine veränderbare Blindleistungssteuerung zu verwenden. Vorzugsweise speist dieser Windpark über einen gemeinsamen Netzanschlusspunkt in das Versorgungsnetz ein. Auch für den Windpark ist es vorteilhaft, wenn dieser FACTS-fähig ist.

Nachfolgend wird die Erfindung anhand von Ausführungsformen unter Bezugnahme auf die begleitenden Figuren beispielhaft erläutert.

Figur 1 zeigt schematisch eine Windenergieanlage.

Figur 2 zeigt schematisch einen Windpark.

Figur 3 zeigt schematisch eine Windenergieanlage, die zum Einspeisen ein erfindungsgemäßes Verfahren gemäß einer Ausführungsform einsetzt.

Figur 4 illustriert für eine frequenzabhängige Wirkleistungssteuerung das Vorgeben einer Einstellfunktion mit Hilfe von Stützstellen

Figur 5 illustriert für das Beispiel einer netzspannungsabhängigen Blindleistungssteuerung das Vorgeben der Einstellfunktion mit Hilfe von Stützstellen und eine Möglichkeit der Variation.

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

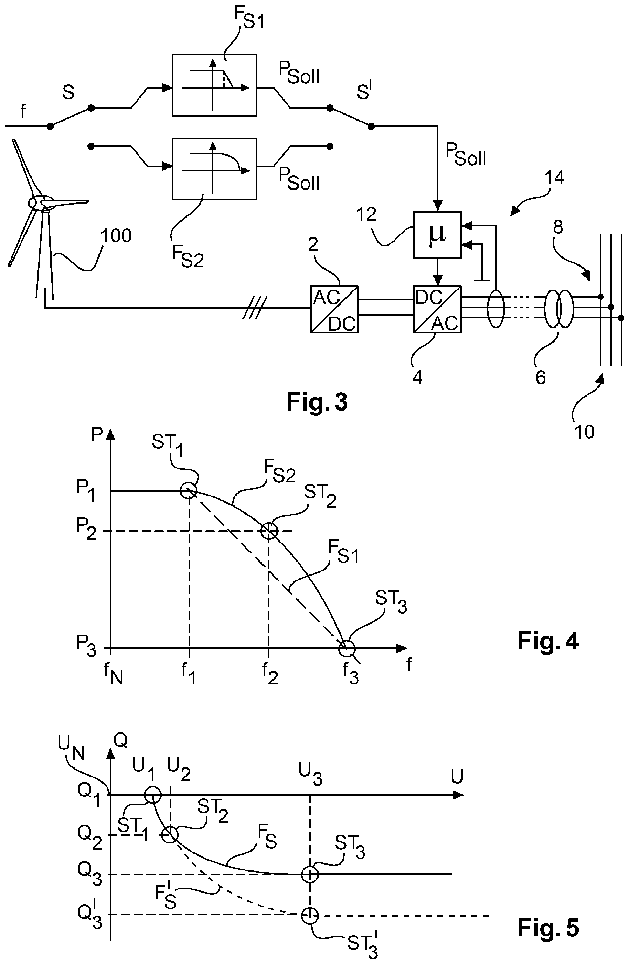

Figur 3 veranschaulicht eine Windenergieanlage 100, die bspw. einen dreiphasigen Generatorstrom einem Gleichrichter 2 zuführt, der wiederum mit einem Wechselrichter 4 verbunden ist, der einen dreiphasigen Wechselstrom erzeugt, um diesen über einen Transformator 6 an einem Einspeisepunkt 8 (PCC) in ein elektrisches Versorgungsnetz 10 einzuspeisen. Die Steuerung des Wechselrichters 4 erfolgt über eine Steuereinheit 12, die bspw. als ein oder mehrere Prozessrechner ausgebildet sein kann. Die Steuereinheit 12 verwertet bspw. auch Messwerte über Strom und Spannung nach Amplitude, Frequenz und Phase ihres ausgegebenen dreiphasigen Stroms. Hierzu ist eine Messrückführung 14 veranschaulichend dargestellt.

Die Struktur der Figur 3 veranschaulicht zudem, dass die Steuereinheit 12 einen Leistungssollwert berücksichtigt und entsprechend den Wechselrichter 4 so ansteuern wird, dass der eine solche gewünschte Leistung P ausgibt. Idealisierend ist die von dem Wechselrichter 4 ausgegebene Leistung P identisch mit der Sollleistung $P_{soll}$, so dass gilt $P = P_{soll}$. Weiter kann für die vorliegende Betrachtungen idealisierend davon ausgegangen werden, dass die erzeugte Leistung P auch diejenige ist, die in das Netz 10 eingespeist wird. Bei der vorliegenden Betrachtung werden also Verluste bei der Einspeisung und dynamische Vorgänge zwischen der Sollleistung und der erzeugten Leistung vernachlässigt.

Die Struktur der Figur 3 veranschaulicht nun, dass dieser Wirkleistungssollwert $P_{soll}$ und damit idealisierend auch die einzuspeisende Wirkleistung P in Abhängigkeit der Frequenz f bestimmt bzw. vorgegeben wird. Dazu stehen zwei Einstellfunktionen $F_{S1}$ und $F_{S2}$ zur Verfügung, die hier repräsentativ für weitere Einstellfunktionen dargestellt sind. Es ist nun ein Schalter S und ein damit zusammen arbeitender Schalter S' gezeigt, die veranschaulichen, dass je nach Schalterstellung, also je nach Auswahl, die Wirkleistung $P_{soll}$ über die erste oder zweite Einstellfunktion $F_{S1}$ bzw. $F_{S2}$ vorgegeben werden kann. Die Wahlmöglichkeit mittels des Schalters S bzw. S' ist insoweit nur eine Veranschaulichung und eine solche Auswahlmöglichkeit kann bspw. auch in der Steuereinheit 12 umgesetzt sein, so dass die Steuereinheit 12 also unmittelbar die Netzfrequenz f empfängt. Außerdem ist eine solche Umschaltung vorzugsweise im Prozessrechner realisiert, indem der bspw. je nach gewählter Einstellfunktion auf einen entsprechenden Datenspeicher zurückgreift, in dem die gewünschte Einstellfunktion hinterlegt ist.

Figur 3 veranschaulicht, dass eine Einstellfunktion für die einzuspeisende Wirkleistung und damit eine Wirkleistungssteuerung änderbar ist. Hier ist eine Wirkleistungssteuerung in Abhängigkeit der Netzfrequenz f beispielhaft gezeigt. Die Veranschaulichung soll aber repräsentativ stehen auch für eine Steuerung in Abhängigkeit eines anderen Netzzustandes wie bspw. der Netzspannung oder einer Änderung der Netzfrequenz. Sinngemäß ist auch eine netzzustandsabhängige Blindleistungssteuerung in dem veranschaulichten und beschriebenen Sinne umsetzbar. Auch hier können unterschiedliche Netzzustände als Eingangsgröße für die Blindleistungssteuerung verwendet werden.

Figur 4 zeigt für das Beispiel einer frequenzabhängigen Wirkleistungssteuerung wie die zugrundeliegende Einstellfunktion gemäß einer Ausführungsform vorgegeben wird. Zur besseren Veranschaulichung ist dies am Beispiel der Einstellfunktion $F_{S2}$ gezeigt, die auch etwa als Piktogramm in der schematischen Darstellung der Figur enthalten ist. Die Einstellfunktion $F_{S1}$ ist ebenfalls in der Figur 4 gestrichelt eingetragen, soweit sie sich jedenfalls von der Einstellfunktion $F_{S2}$ unterscheidet und entspricht im Grunde der Einstellfunktion $F_{S1}$ wie sie in Figur 3 verwendet wird und in dem Piktogramm angedeutet ist.

Gemäß Figur 4 ist die Einstellfunktion $F_{S2}$ über die Netzfrequenz f von der Nennfrequenz $f_N$ bis zur Frequenz $f_3$ dargestellt. Diese Einstellfunktion weist eine Teilfunktion auf, die von der Frequenz $f_1$ bis zur Frequenz $f_3$ bestimmt ist. Diese Teilfunktion ist eine Polynomfunktion zweiter Ordnung und kann ganz allgemein beschrieben werden als

$$P = a + b \cdot f + c \cdot f^2.$$

Zur Vorgabe dieser Teilfunktion werden die Stützstellen $ST_1$, $ST_2$ und $ST_3$ verwendet. Die jeweiligen Punkte dieser Stützstellen sind durch einen Kreis hervorgehoben. Diese Stützstellen werden durch die folgenden Wertepaare definiert:

$$ST_1 = (f_1, P_1),$$

$$ST_2 = (f_2, P_2)$$

und

$$ST_3 = (f_3, P_3).$$

Es ist zu erkennen, dass dadurch eine kontinuierliche Einstellfunktion $F_{S2}$ leicht definiert werden konnte, die außerdem gegenüber der ersten Einstellfunktion $F_{S1}$, die gestrichelt eingezeichnet ist, Vorteile aufweist. Insbesondere eignet sich die gezeigte zweite Einstellfunktion $F_{S2}$ zur Netzstützung, weil sie frequenzabhängig die Wirkleistung reduzieren kann, wobei gleichzeitig gegenüber der ersten Referenzeinstellfunktion $F_{S1}$ mehr Leistung eingespeist werden kann. Dies ist etwa am deutlichsten bei der zweiten Stützstelle $ST_2$, bei der die zweite Einstellfunktion $F_{S2}$ deutlich mehr Leistung einspeist, als die erste Einstellfunktion $F_{S1}$. Die Vorgabe dieser insoweit günstigeren Einstellfunktion $F_{S2}$ ist dabei denkbar einfach, indem lediglich die gezeigten drei Stützstellen $ST_1$, $ST_2$ und $ST_3$ vorgegeben werden. Die erste und dritte Stützstelle $ST_1$ bzw. $ST_3$ ermöglicht für die Einstellfunktion $F_{S2}$ eine Vorgabe über gezielte Anfangs- und Endpunkte dieses Teilabschnitts der zweiten Einstellfunktion. An diesen Stützstellen weisen die erste und zweite Einstellfunktion $F_{S1}$ und $F_{S2}$ dieselben Werte auf. Die Übereinstimmung dieser Werte ist insoweit einfach umsetzbar, indem genau diese Punkte als erste und dritte Stützstelle $ST_1$ bzw. $ST_3$ vorgegeben werden. Durch die mittlere Stützstelle $ST_2$ kann der Verlauf dieser zweiten Einstellfunktion $F_{S2}$ einfach verbessert werden. Bspw. könnte direkt eine gewünschte höhere Leistungseinspeisung bei der Frequenz $f_2$ dadurch unmittelbar vorgegeben werden.

Die Figur 4 veranschaulicht somit eine Möglichkeit über Stützstellen eine frequenzabhängige Wirkleistungssteuerung bzw. eine entsprechende Einstellfunktion vorzugeben. In einer praktischen Anwendung kann der Leistungswert $P_1$ der Nennleistung der zugrundeliegenden Windenergieanlage oder des zugrundeliegenden Windparks entsprechen. Die Frequenz $f_1$ kann eine Schwellfrequenz sein, ab der die Leistung bei weiter ansteigender Netzfrequenz f reduziert werden muss. Der Wert $P_3$ kann dem Leistungswert 0 entsprechen und die zugehörige Netzfrequenz $f_3$ eine obere Frequenz darstellen, oberhalb der keine Leistung mehr eingespeist werden soll. Der Leistungswert $P_2$ stellt eine Hilfsleistung dar, die wie oben beschrieben, nämlich zur Erhöhung der Leistung gewählt werden kann. Entsprechend ist die Netzfrequenz $f_2$ dieser zweiten Stützstelle $ST_2$ ein Wert zwischen der Schwellfrequenz $f_1$ und der obersten Frequenz $f_3$ und wird vorteilhafterweise mit äquidistantem Abstand zwischen diesen beiden Werten gewählt. Im Übrigen ist in dem Diagramm noch eine Frequenz $f_N$ eingezeichnet, die die Nennfrequenz der Netzfrequenz repräsentieren kann. Die Einstellfunktion $F_{S2}$ verläuft hierbei zwischen der ersten Stützstelle und dem Leistungswert $P_1$ bei der Nennfrequenz $f_N$ waagerecht, so dass in diesem Bereich keine Leistungsreduzierung erfolgen soll.

Figur 5 wählt ein weiteres Beispiel der Vorgabe einer Einstellfunktion $F_S$ an. Diese Einstellfunktion $F_S$ gibt eine Blindleistung Q in Abhängigkeit der Netzspannung U an. In der Figur 5 wird nur die Teilfunktion von der Netzspannung $U_1$ bis zur Netzspannung $U_3$ betrachtet. Für Netzspannungen kleiner $U_1$ bis zur Nennnetzspannung $U_N$ kann die Einstellfunktion waagerecht verlaufen und den Wert 0 annehmen, so dass in dem Bereich also keine Blindleistung eingespeist wird bzw. eingespeist werden soll. Oberhalb der Netzspannung $U_3$ verläuft die Blindleistung ebenfalls auf einem konstanten Wert, nämlich dem Wert $Q_3$. Alternativ kann aber auch vorgesehen sein, für Spannungen in dem Bereich auch die Windenergieanlage abzuschalten.

Die gezeigte Einstellfunktion $F_S$ wird nun vorgegeben durch die Stützstellen $ST_1$, $ST_2$ und $ST_3$, die hier dieselbe Bezeichnung wie in der Figur 3 haben, aber natürlich gänzlich andere Werte aufweisen, nämlich werden sie durch folgenden Wertepaare bestimmt:

$$ST_1 = (U_1, Q_1);$$

$$ST_2 = (U_2, Q_2)$$

und

$$ST_3 = (U_3, Q_3).$$

Somit wird hier eine Einstellfunktion für die Blindleistung in Abhängigkeit der Netzspannung U auf einfache Art und Weise angegeben. Sie weist den Wert $Q_1$, insbesondere nämlich 0 auf, solange die Netzspannung den Spannungswert $U_1$ noch nicht überschritten hat. Mit weiter ansteigender Netzspannung U nimmt dann die Blindleistung Q bis zum Wert $Q_3$ zu, der sich bei dem Netzspannungswert $U_3$ einstellt. Um aber gleich am Anfang eine starke Steigung - mit negativen Vorzeichen - für die Blindleistung erreichen zu können, wird die zweite Stützstelle $ST_2$ für den Netzspannungswert $U_2$ mit einem entsprechend hohen - dem Betrage nach - Blindleistungswert $Q_2$ vorgegeben. Es kann somit anfangs sehr schnell hohe Blindleistung - mit negativen Vorzeichen - eingespeist werden, um dadurch einem weiteren Netzspannungsanstieg schnell entgegenwirken zu können, insbesondere dann, wenn eine lange und/oder dominante induktive Anschlussleitung zum Netz oder Verbindungsleitung im Netz vorliegt. Im Übrigen kann eine ähnliche oder identische Einstellfunktion im Grunde punktgespiegelt über den Punkt $(U_N, Q_1)$ für einen Spannungsabfall verwendet werden. Dann wird vorgeschlagen, in gleicher Art und Weise, nämlich bei entsprechend unter den Nennspannungswert $U_N$ fallender Netzspannung positive Blindleistung einzuspeisen, um einem weiteren Spannungsabfall entgegenzuwirken.

Figur 5 veranschaulicht außerdem die Möglichkeit, den Blindleistungswert $Q_3$, der zunächst einen betragsmäßig maximalen Wert für die Blindleistungseinspeisung darstellt, dem Betrage nach noch weiter zu erhöhen. Es wird insbesondere vorgeschlagen, eine solche weitere Erhöhung dann vorzusehen, wenn die Windenergieanlage bzw. der Windpark, der dieser veranschaulichten Blindleistungseinspeisung zugrundeliegt, wenig Wirkleistung oder gar keine Wirkleistung einspeist. Bspw. kann als Kriterium vorgesehen sein, den Blindleistungsmaximalwert dem Betrage nach zu erhöhen, wenn die eingespeiste Wirkleistung unter 50 Prozent ihrer Nennleistung fällt, um nur ein beispielhaften Wert zu nennen. Ebenso kann, um ein weiteres Beispiel zu nennen, eine Änderung des Blindleistungswertes $Q_3$ vorgeschlagen werden, wenn gar keine Wirkleistung eingespeist wird. Es hat sich nämlich gezeigt, dass eine höhere Blindleistung einspeisbar ist, wenn weniger Wirkleistung eingespeist wird.

Um eine solche Änderung der Einstellfunktion $F_S$ vorzunehmen, um nämlich die gestrichelt eingezeichnete Einstellfunktion $F_S'$ zu erhalten, braucht nur die dritte Stützstelle $ST_3$ in die geänderte Stützstelle $ST_3'$ geändert zu werden. Die zweite Stützstelle $ST_2$ kann auch verändert werden, ist in der gezeigten Darstellung der Figur 5 aber nicht geändert worden. Hierdurch kann erreicht werden, dass die ohnehin schon sehr starke Anstiegsfunktion - dem Betrage nach - der einzuspeisenden Blindleistung nicht weiter erhöht zu werden braucht, sondern nur die besagte dritte Stützstelle $ST_3$ auf $ST_3'$.

Figur 5 zeigt insoweit die Vorgabe von drei Stützstellen $ST_1$, $ST_2$ und $ST_3$ bzw. $ST_3'$ und kann dadurch eine Polynomfunktion zweiter Ordnung fest definieren. An der ersten Stützstelle $ST_1$ wird ein anderer Teilabschnitt der Einstellfunktion $F_s$ angesetzt und ebenso an der dritten Stützstelle $ST_3$ bzw. $ST_3'$. Alternativ kann aber hier bspw. auch eine andere Funktion zugrundegelegt werden, wie bspw. eine tanh-Funktion oder Wurzelfunktion.

**Patentansprüche**

1.  Verfahren zum Einspeisen elektrischer Leistung wenigstens einer Windenergieanlage (100) oder eines Windparks (112) in ein elektrisches Versorgungsnetz (120) mit einer Netzspannung (U) und einer Netzfrequenz (f), wobei das Verfahren

    - zum Einspeisen elektrischer Wirkleistung (P) und elektrischer Blindleistung (Q) vorbereitet ist und
    - die eingespeiste Wirkleistung (P) über eine Wirkleistungssteuerung ($R_1$, $R_2$) in Abhängigkeit eines Netzzustandes (U, f) einstellbar ist und/oder
    - die eingespeiste Blindleistung (Q) über eine Blindleistungssteuerung in Abhängigkeit wenigstens eines Netzzustandes (U,f) einstellbar ist und
    - die Wirkleistungssteuerung ($R_1$, $R_2$) bzw. die Blindleistungsteuerung einen einzuspeisenden Sollwert vorgeben, der jeweils über eine Einstellfunktion ($F_S$) in Abhängigkeit wenigstens eines Netzzustandes (U,f) eingestellt wird, wobei
    - die Einstellfunktion ($F_S$) mit Hilfe von Stützstellen ($ST_1$, $ST_2$, $ST_3$) vorgegeben wird, die durch Wertepaare ([Pi, fi]) aus jeweils einem Wertfür die Wirkleistung (P) bzw. Blindleistung (Q) und einem Wert für den Netzzustand (U, f) definiert sind,

**dadurch gekennzeichnet, dass** eine Änderung der Einstellfunktion ($F_S$) in Abhängigkeit

- einer Netzsensitivität (NS) und/oder
- eines Kurzschlussstromverhältnisses (SCR)

vorgenommen wird.

2. Verfahren nach Anspruch 1,
**dadurch gekennzeichnet, dass**
die Einstellfunktion ($F_S$) abhängig eines Änderungskriteriums geändert wird und dass die Änderung wenigstens durch Ändern eines der Wertepaare ([Pi, fi]) durchgeführt wird.

3. Verfahren nach einem der Ansprüche 1 oder 2,
**dadurch gekennzeichnet, dass**
die Einstellfunktion ($F_S$) abschnittsweise aus mehreren Teilfunktionen zusammengesetzt ist und jeweils zwei der Teilfunktionen an einer der Stützstellen ($ST_1$) zusammengesetzt sind und an der Stützstelle ($ST_1$) denselben Wert aufweisen.

4. Verfahren nach einem der vorstehenden Ansprüche,
**dadurch gekennzeichnet, dass**
die Einstellfunktion ($F_S$) oder wenigstens eine ihrer Teilfunktionen ihrer Art nach

- eine Polynomfunktion erster Ordnung,
- eine Polynomfunktion zweiter Ordnung,
- eine Polynomfunktion dritter oder höherer Ordnung,
- eine Exponentialfunktion,
- eine Hysterese-Funktion,
- eine trigonometrische Funktion oder
- eine andere nichtlineare Funktion

ist.

5. Verfahren nach einem der vorstehenden Ansprüche,
**dadurch gekennzeichnet, dass**
die Einstellfunktion ($F_S$) oder wenigstens eine ihrer Teilfunktionen durch wenigstens zwei Stützstellen ($ST_1$, $ST_2$, $ST_3$) und ihre Art festgelegt wird.

6. Verfahren nach einem der vorstehenden Ansprüche,
**dadurch gekennzeichnet, dass**
die Einstellfunktion ($F_S$) oder wenigstens eine ihrer Teilfunktionen

- durch Verwendung einer Polynomfunktion erster Ordnung und Vorgabe von zwei Stützstellen ($ST_1$, $ST_2$) festgelegt wird oder
- durch Verwendung einer Polynomfunktion zweiter Ordnung und Vorgabe von drei Stützstellen ($ST_1$, $ST_2$, $ST_3$) festgelegt wird.

7. Verfahren nach einem der vorstehenden Ansprüche,
**dadurch gekennzeichnet, dass** die Einstellfunktion (FS) in Abhängigkeit

- der Netzspannung,
- der Netzfrequenz und/oder
- der Netzsensitivität

eingestellt wird.

8. Windenergieanlage (100) zum Einspeisen elektrischer Leistung (P) in ein Versorgungsnetz (120), **dadurch gekennzeichnet, dass** die Windenergieanlage (100) ausgeführt ist, zum Einspeisen ein Verfahren nach einem der vorstehenden Ansprüche zu verwenden.

9. Windpark (112) zum Einspeisen elektrischer Leistung (P) in ein Versorgungsnetz (120), **dadurch gekennzeichnet, dass** der Windpark (112) ausgeführt ist, zum Einspeisen ein Verfahren nach einem der Ansprüche 1 bis 7 zu verwenden.

**Claims**

1. A method for feeding electric power of at least one wind power installation (100) or of a wind farm (112) into an electric power supply system (120) having a line voltage (U) and a grid frequency (f), wherein the method

- is prepared to feed an electric active power (P) and an electric reactive power (Q) and
- the active power (P) that is fed in by means of an active power control ($R_1$, $R_2$) can be adjusted as a function of a grid state (U, f) and/or
- the reactive power (Q) that is fed in by means of a reactive power control can be adjusted as a function of at least one grid state (U,f) and
- the active power control ($R_1$, $R_2$) or the reactive power control respectively specify a target value to be fed in, each of which are adjusted by means of an adjustment function ($F_S$) as a function of at least one grid state (U,f), wherein
- the adjustment function ($F_S$) is specified with the help of points of support ($ST_1$, $ST_2$, $ST_3$), which are defined by pairs of values ([Pi, fi]), each of which define a value for the active power (P) or reactive power (Q) respectively, and a value for the grid state (U, f),

**characterized in that**
the adjustment function ($F_S$) is modified as a function of

- a grid sensitivity (NS) and/or,
- a short-circuit ratio (SCR).

**2.** The method according to Claim 1, **characterized in that** the adjustment function ($F_S$) is modified as a function of a modification criterion and **in that** the modification is carried out by modifying at least one of the pairs of values ([Pi, fi]).

**3.** The method according to one of the Claims 1 or 2, **characterized in that** the adjustment function ($F_S$) is composed, at least in sections, of a plurality of partial functions and at least two of the partial functions are put together at one of the points of support ($ST_1$) and have the same value at this point of support ($ST_1$).

**4.** The method according to one of the above claims, **characterized in that** the adjustment function ($F_S$) or at least one of the partial functions thereof, depending on its kind, is

- a first-degree polynomial function,
- a second-degree polynomial function,
- a third or higher degree polynomial function,
- an exponential function,
- a hysteresis function,
- a trigonometric function or
- another non-linear function.

**5.** The method according to one of the above claims, **characterized in that** the adjustment function ($F_S$) or at least one of the partial functions thereof is determined by at least two points of support ($ST_1$, $ST_2$, $ST_3$) and the type thereof.

**6.** The method according to one of the above claims, **characterized in that** the adjustment function ($F_S$) or at least one of the partial functions thereof is determined

- through the use of a first-degree polynomial function and the specification of two points of support ($ST_1$, $ST_2$) or
- through the use of a second-degree polynomial function and the specification of three points of support ($ST_1$, $ST_2$, $ST_3$).

**7.** The method according to one of the above Claims, **characterized in that** the adjustment function (FS) is adjusted as a function of

- the line voltage,
- the grid frequency and/or
- the grid sensitivity.

**8.** A wind power installation (100) for feeding electric power (P) into a supply grid (120), **characterized in that** the wind power installation (100) is configured to use a method according to one of the above claims to feed in electric power.

**9.** A wind farm (112) for feeding electric power (P) into a supply grid (112) **characterized in that** the wind farm (112) is configured to use a method according to one of the claims 1 to 7 to feed in electric power.

**Revendications**

**1.** Procédé d'injection de puissance électrique d'au moins une éolienne (100) ou d'un parc éolien (112) dans un réseau d'alimentation électrique (120) avec une tension du réseau (U) et une fréquence du réseau (f), dans lequel le procédé

- est préparé pour injecter une puissance active (P) électrique et une puissance réactive (Q) électrique et
- la puissance active (P) injectée peut être réglée en fonction d'un état du réseau (U, f) par l'intermédiaire d'une commande de puissance active ($R_1$, $R_2$) et/ou
- la puissance réactive (Q) injectée peut être réglée en fonction d'au moins un état du réseau (U, f) par l'intermédiaire d'une commande de puissance réactive et
- la commande de puissance active ($R_1$, $R_2$) ou la commande de puissance réactive prédéfinit une valeur théorique à injecter, qui est réglée par l'intermédiaire d'une fonction de réglage ($F_S$) en fonction d'au moins un état du réseau (U, f), dans lequel
- la fonction de réglage ($F_S$) est prédéfinie à l'aide de points d'appui ($ST_1$, $ST_2$, $ST_3$), qui sont définis par des paires de valeurs ([Pi, fi]]) à partir de respectivement une valeur pour la puissance active (P) ou puissance réactive (Q) et d'une valeur pour l'état du réseau (U, f),

**caractérisé en ce que** une modification de la fonction de réglage (Fs) est réalisée en fonction

- d'une sensibilité du réseau (NS) et/ou
- d'un rapport de courant de court-circuit (SCR).

**2.** Procédé selon la revendication 1, **caractérisé en ce que** la fonction de réglage ($F_S$) est modifiée en fonction d'un critère de modification et que la modification est effectuée au moins par modification d'une des paires de valeurs ([Pi, fi]).

**3.** Procédé selon l'une quelconque des revendications 1 ou 2, **caractérisé en ce que**

la fonction de réglage (F$_S$) est composée sur certaines parties de plusieurs fonctions partielles et respectivement deux des fonctions partielles sont composées sur un des points d'appui (ST$_1$) et présentent la même valeur sur le point d'appui (ST$_1$).

4. Procédé selon l'une quelconque des revendications précédentes,
**caractérisé en ce que**
la fonction de réglage (F$_S$) ou au moins l'une de ses fonctions partielles est par nature

- une fonction polynomiale de premier ordre,
- une fonction polynomiale de deuxième ordre,
- une fonction polynomiale de troisième ordre ou supérieure,
- une fonction exponentielle,
- une fonction d'hystérèse,
- une fonction trigonométrique ou
- une autre fonction non linéaire.

5. Procédé selon l'une quelconque des revendications précédentes,
**caractérisé en ce que**
la fonction de réglage (F$_S$) ou au moins une de ses fonctions partielles est définie par au moins deux points d'appui (ST$_1$, ST$_2$, ST$_3$) et sa nature.

6. Procédé selon l'une quelconque des revendications précédentes,
**caractérisé en ce que**
la fonction de réglage (F$_S$) ou au moins une de ses fonctions partielles

- est établie en utilisant une fonction polynomiale de premier ordre et en définissant deux points d'appui (ST$_1$, ST$_2$) ou
- est établie en utilisant une fonction polynomiale de deuxième ordre et en définissant trois points d'appui (ST$_1$, ST$_2$, ST$_3$) .

7. Procédé selon l'une quelconque des revendications précédentes, **caractérisé en ce que** la fonction de réglage (F$_S$) est réglée en fonction

- de la tension du réseau,
- de la fréquence du réseau et/ou
- de la sensibilité du réseau.

8. Eolienne (100) destinée à injecter une puissance électrique (P) dans un réseau d'alimentation (120), **caractérisée en ce que** l'éolienne (100) est conçue, pour l'injection, pour utiliser un procédé selon l'une quelconque des revendications précédentes.

9. Parc éolien (112) destiné à injecter une puissance électrique (P) dans un réseau d'alimentation (120), **caractérisé en ce que** le parc éolien (112) est conçu, pour l'injection, pour utiliser un procédé selon l'une quelconque des revendications 1 à 7.

**Fig. 1**

**Fig. 2**

**Fig. 3**

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6784564 B
- US 6891281 B
- US 6965174 B
- US 7462946 B
- US 7800242 B